# EUROPÄISCHE PATENTSCHRIFT

(11) **EP 2 855 591 B1**
(45) Veröffentlichungstag und Bekanntmachung des Hinweises auf die Patenterteilung: **17.02.2016**
(21) Anmeldenummer: 13723142.9
(22) Anmeldetag: 16.05.2013
(51) Int. Cl.: C08L 83/04, C08L 83/08

(54) **VERNETZBARE MASSEN AUF DER BASIS VON ORGANOSILICIUMVERBINDUNGEN**
CROSSLINKABLE COMPOSITIONS BASED ON ORGANOSILICON COMPOUNDS
COMPOSITIONS RÉTICULABLES À BASE DE COMPOSÉS D'ORGANOSILICIUM

(30) Priorität: 25.05.2012 DE 102012208864
(43) Veröffentlichungstag der Anmeldung: 08.04.2015
(73) Patentinhaber: Wacker Chemie AG, 81737 München (DE)
(72) Erfinder: SCHÖLEY, Peter, 01665 Diera-Zehren (DE); DINEIGER, Gabriele, 01662 Meissen (DE); SCHEIM, Uwe, 01640Coswig (DE)
(74) Vertreter: Budczinski, Angelika
(86) Internationale Anmeldenummer: PCT/EP2013/060132
(87) Internationale Veröffentlichungsnummer: WO 2013/174708

(56) Entgegenhaltungen:
- DE-A1-102007 037 197

## Beschreibung

Die Erfindung betrifft vernetzbare Massen auf der Basis von Organosiliciumverbindungen, welche unter Abspaltung von Alkoholen zu Materialien mit sehr hoher Stabilität aushärten, Verfahren zu deren Herstellung sowie deren Verwendung.

Unter Ausschluss von Wasser lagerfähige, bei Zutritt von Wasser bei Raumtemperatur unter Abspaltung von Alkoholen zu Elastomeren aushärtende Einkomponenten-Dichtmassen sind bereits bekannt. Diese Produkte werden in großen Mengen z.B. in der Bauindustrie eingesetzt. Die Basis dieser Mischungen sind Polymere, die durch Silylgruppen terminiert sind, die reaktive Substituenten, wie OH-Gruppen oder hydrolysierbare Gruppen, wie z.B. Alkoxygruppen, tragen. Des Weiteren können diese Dichtmassen Füllstoffe, Weichmacher, Vernetzer, Katalysatoren sowie verschiedene Additive enthalten.

Die nach der Aushärtung erhaltenen gummielastischen Produkte ändern ihre mechanischen Eigenschaften praktisch nicht mehr. Damit sind sie beispielsweise hervorragend als Fugendichtmasse geeignet. Häufig werden diese Massen jedoch auch als Beschichtungsmaterialien oder als Klebstoffe verwendet. In solchen Fällen können die ausgehärteten Massen oft gleichzeitig der Einwirkung von hohen Temperaturen und hohen Luftfeuchtigkeiten über längere Zeiträume ausgesetzt sein. Unter diesen Bedingungen kann sich das positive Eigenschaftsprofil der ausgehärteten Produkte noch nachträglich unerwünscht ändern.

So ist beispielsweise bekannt, dass bei 1- und 2-Komponenten-massen, welche auf vernetzbaren Organopolysiloxanen mit hydrolysierbaren Gruppen basieren, die Haftung auf Glas unter Einwirkung von Wärme und Feuchtigkeit sehr schnell irreversibel verloren geht. Eine erste Verbesserung konnte durch Einsatz einer Kombination aus Aminopropyltrimethoxysilan und Glycidoxypropyltrimethoxysilan erzielt werden. Darüber hinaus wird in DE 196 16789 A1 gezeigt, dass kein Adhäsionsriss nach Heißwasserlagerung von Prüfkörpern eintritt, wenn die Massen zusätzlich sowohl ein Siliconharz als auch ein Alkoxysilan mit langkettigem Alkylrest enthalten. Ein Zusatz nur einer der zwei Organosiliciumverbindungen allein bewirkt noch keine Haftungsverbesserung, wirksam ist nur die Kombination beider Additive.

In DE-A1 102007037197 sind Massen auf Basis vernetzbarer α-Silane beschrieben. Darin wird auch auf die Möglichkeit verwiesen, dass eine Vielzahl an monomeren, substituierten oder unsubstituierten Silanen als Teil- oder als Cohydrolysat enthalten sein können. Spezielle Vorteile ausgewählter Hydrolysate werden daraus jedoch nicht abgeleitet. In den Ausführungsbeispielen werden geringe Mengen eines oligomeren Hydrolysates aus Methyltrimethoxysilan in einer Abmischung mit einem Haftvermittler eingesetzt. Die ausgehärteten Massen weisen jedoch den Nachteil auf, dass sie bei hohen Temperaturen und sehr hohen Luftfeuchtigkeiten teilweise ihre Elastizität verlieren können. Dies zeigt sich insbesondere in einer Verringerung der Gummihärte. Ein Weg, wie dieser Elastizitätsverlust bei diesen Massen verhindert werden kann, wurde bisher noch nicht aufgezeigt.

Gegenstand der Erfindung sind durch Kondensationsreaktion vernetzbare Massen herstellbar unter Verwendung von
(A) Organosiliciumverbindungen mit mindestens zwei OH-Gruppen,
(B) heterocyclischen Verbindungen der Formel

   A[CR¹₂SiRₐ(OR²)₃₋ₐ]ₓ (I),

   wobei
   A einen auf einem Heterocyclus AHₓ basierenden Rest darstellt, enthaltend mindestens ein ringbildendes Element der 3. und/oder 5. Hauptgruppe, bei dem x Wasserstoffatome durch chemische Bindungen zum CR¹₂-Rest ersetzt sind, wobei sich mindestens eine dieser Bindungen an einem ringbildenden Element der 3. oder 5. Hauptgruppe befindet,
   R gleiche oder verschiedene, einwertige, gegebenenfalls substituierte Kohlenwasserstoffreste bedeutet,
   R¹ gleich oder verschieden sein kann und Wasserstoffatom oder einwertige, gegebenenfalls substituierte Kohlenwasserstoffreste bedeutet,
   R² gleich oder verschieden sein kann und einwertige, gegebenenfalls substituierte Kohlenwasserstoffreste bedeutet,
   a gleich 0 oder 1, bevorzugt 0, ist und
   x gleich 1, 2 oder 3, bevorzugt 1 oder 2, besonders bevorzugt 1, ist,
   und/oder deren Teilhydrolysaten
   sowie
(C) mindestens einer Verbindung enthaltend Einheiten der Formeln

   R⁵Si(OR⁴)₂O_{1/2} (III),

   R⁵Si(OR⁴)O_{2/2} (IV)

   und

   R⁵SiO_{3/2} (V),

   wobei
   R⁴ gleich oder verschieden sein kann und jeweils unabhängig voneinander einen Alkylrest bedeutet und
   R⁵ jeweils unabhängig voneinander ein Kohlenwasserstoffrest ist,
      mit der Maßgabe, dass Verbindung (C) mindestens 20 Mol-% Einheiten der Formel (V) enthält.

Bei den Teilhydrolysaten der Verbindungen der Formel (I) kann es sich um Teilhomohydrolysate handeln wie auch um Teilcohydrolysate. Falls es sich bei der erfindungsgemäß eingesetzten Komponente (B) um Teilhydrolysate der Verbindungen der Formel (I) handelt, sind solche mit bis zu 10 Siliciumatomen bevorzugt.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluorprop-1-ylrest, der 1,1,1,3,3,3-Hexafluorprop-2-ylrest und der Heptafluorprop-2-ylrest, Halogenarylreste, wie der o-, m- und p-Chlorphenylrest, und der 2-Methoxyethylrest, der 2-Methoxyprop-1-ylrest sowie der 2-(2-Methoxyethoxy)ethylrest.

Beispiele für Reste R¹ sind Wasserstoffatom sowie die für R angegebenen Reste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Reste R² sind die für R angegebenen Reste.

Bevorzugt handelt es sich bei Rest R² um Alkylreste mit 1 bis 6 Kohlenstoffatomen, besonders bevorzugt um den Methyl- und Ethylrest, insbesondere um den Ethylrest.

Bei Rest A handelt es sich um cyclische Verbindungen mit ringbildenden Atomen aus mindestens zwei verschiedenen Elementen, mit der Maßgabe, dass mindestens ein ringbildendes Atom ein Element der 3. und/oder 5. Hauptgruppe darstellt, welches eine Bindungsstelle zum Kohlenstoffatom des Rests -CR¹₂- in Formel (I) aufweist.

Bevorzugt handelt es sich bei Rest A um cyclische organische Verbindungen, deren Ringstrukturen neben Kohlenstoffatomen noch mindestens ein Element der 3. und/oder 5. Hauptgruppe und besonders bevorzugt mindestens ein weiteres Heteroatom enthalten.

Im Folgenden soll unter der Bezeichnung "Heteroatome" alle ringbildenden Atome außer Kohlenstoff verstanden werden.

Bei den ringbildenden Heteroatomen in Rest A handelt es sich bevorzugt um Stickstoff, Phosphor, Sauerstoff, Silicium und Schwefel, besonders bevorzugt um Stickstoff und Sauerstoff.

Bei Rest A kann es sich auch um gegebenenfalls substituierte, gesättigte oder teilweise ungesättigte Heterocyclen handeln. Falls der Ring A substituiert ist, handelt es sich bei den Substituenten bevorzugt um Halogenatome, Kohlenwasserstoffreste und Organyloxyreste, wobei es sich bei diesen Substituenten um mehrwertige Reste handeln kann, die an einem oder mehreren ringbildenden Atomen gebunden sein können.

Rest A kann auch Ringkohlenstoffatome mit über Doppelbindung gebundenen Sauerstoff- oder Schwefelatomen enthalten, mit der Maßgabe, dass solche Ringkohlenstoffatome keine direkte Bindung zu einem ringbildenden Heteroatom der 3. oder 5. Hauptgruppe, welches an einen CR¹₂-Rest der Formel (I) gebunden ist, haben.

Es können im Rest A auch Ringkohlenstoffatome mit über Doppelbindung gebundenen Stickstoff- oder Phosphoratomen enthalten sein, was jedoch nicht bevorzugt ist.

Bei Rest A handelt es sich bevorzugt um 3-, 4-, 5-, 6-, 7- oder 8-gliedrige Heterocyclen, die als ringbildende Atome neben Kohlenstoff Stickstoff und/oder Phosphor und/oder Sauerstoff und/oder Schwefel als Heteroatom aufweisen, mit der Maßgabe, dass mindestens ein ringbildendes Atom ein Element der 3. und/oder 5. Hauptgruppe darstellt, wobei auch weitere Ringe annelliert sein können.

Besonders bevorzugt handelt es sich bei den Heterocyclen, auf denen die Reste A basieren, um 5- und 6-gliedrige Heterocyclen, die neben dem zur Bindung zum CR¹₂-Rest der Verbindungen der Formel (I) benötigten Heteroatom der 3. und/oder 5. Hauptgruppe ein weiteres Ringheteroatom enthalten.

Beispiele für Heterocyclen, auf welchen die Reste A basieren, sind Aziridin, Azetidin, Pyrrol, Pyrrolidin, 1,3-Oxazolidin, 1,3-Thiazolidin, 1H-1,2-Diazol, Δ²-1,2-Diazolin, Δ⁴-1,2-Diazo-lin, 1,3-Diazol, Δ²-1,3-Diazolin, Δ⁴-1,3-Diazolin, 1,3-Diazolidin, 1,2,3-Triazol, 1,2,4-Triazol, Tetrazol, Δ⁴-1,2-Diazolin-3-on, Piperidin, Tetrahydro-1,4-oxazin, Tetrahydro-1,4-thiazin, Hexahydro-1,3-diazin, Hexahydro-1,4-diazin, 1-Methylhexahydro-1,4-diazin, Hexahydro-1,3,5-triazin, Hexahydro-1,3-diazin-4-on, 4-Methylhexahydro-1,4-diazin-3-on, 1H-Azepin, Hexahydroazepin, Octahydroazocin, 1H-Benzo[b]pyrrol, 2,3-Dihydrobenzo[b]pyrrol, 9H-Dibenzopyrrol, Benzo[d]-1,2-diazol, Benzo[d]-1,3-diazol und Benzo[d]-1,2,3-triazol.

Besonders bevorzugt sind Pyrrolidin, Piperidin, Tetrahydro-1,4-oxazin, Tetrahydro-1,4-thiazin, Tetrahydro-1,4-diazin und 1-Methyltetrahydro-1,4-diazin, insbesondere Tetrahydro-1,4-oxazin.

Beispiele für heterocyclische Verbindungen (B) sind 1-(Triethoxysilylmethyl)aziridin, 1-(Triethoxysilylmethyl)azetidin, 1-(Triethoxysilylmethyl)pyrrol, 1-(Triethoxysilylmethyl)pyrrolidin, 3-(Triethoxysilylmethyl)-1,3-oxazolidin, 3-(Triethoxysilylmethyl)-1,3-thiazolidin, 1-(Triethoxysilylmethyl)-1H-1,2-diazol, 1-(Triethoxysilylmethyl)-Δ²-1,2-diazolin, 1-(Triethoxysilylmethyl)-Δ⁴-1,2-diazolin, 1-(Triethoxysilylmethyl)-1,3-diazol, 1-(Triethoxysilylmethyl)-Δ²-1,3-diazolin, 1-(Triethoxysilylmethyl)-Δ⁴-1,3-diazolin, 1-(Triethoxysilylmethyl)-1,3-diazolidin, 1,3-Bis(Triethoxysilylmethyl)-1,3-diazolidin, 1-(Triethoxysilylmethyl)-1H-1,2,3-triazol, 2-(Triethoxysilylmethyl)-2H-1,2,3-triazol, 1-(Triethoxysilylmethyl)-1H-1,2,4-triazol, 4-(Triethoxysilylmethyl)-4H-1,2,4-triazol, 1-(Triethoxysilylmethyl)-1H-tetrazol, 2-(Triethoxysilylmethyl)-2H-tetrazol, 1-(Triethoxysilylmethyl)-Δ⁴-1,2-diazolin-3-on, 1-(Triethoxysilylmethyl)piperidin, 4-(Triethoxysilylmethyl)tetrahydro-1,4-oxazin, 4-(1-(Triethoxysilyl)ethyl)tetrahydro-1,4-oxazin, 4-(2-(Triethoxysilyl)prop-2-yl)tetrahydro-1,4-oxazin, 4-(1-Phenyl-1-(triethoxysilyl)ethyl)tetrahydro-1,4-oxazin, 4-(Triethoxysilylmethyl)tetrahydro-1,4-thiazin, 1-(Triethoxysilylmethyl)hexahydro-1,3-diazin, 1-(Triethoxysilylmethyl)hexahydro-1,4-diazin, 1-Methyl-4-(Triethoxysilylmethyl)hexahydro-1,4-diazin, 1,4-Bis(triethoxysilylmethyl)hexahydro-1,4-diazin, 1,4-Bis(1-(triethoxysilyl)ethyl)hexahydro-1,4-diazin, 1-(Triethoxysilylmethyl)hexahydro-1,3,5-triazin, 1,3-Bis(triethoxysilylmethyl)hexahydro-1,3,5-triazin, 1,3,5-Tris(triethoxysilylmethyl)hexahydro-1,3,5-triazin, 1-(Triethoxysilylmethyl)-hexahydro-1,3-diazin-4-on, 1-(Triethoxysilylmethyl)-4-methyl-hexahydro-1,4-diazin-3-on, 1-(Triethoxysilylmethyl)-1H-azepin, 1-(Triethoxysilylmethyl)hexahydroazepin, 1-(Triethoxysilylmethyl)octahydroazocin, 1-(Triethoxysilylmethyl)benzo[b]pyrrol, 1-(Triethoxysilylmethyl)-2,3-dihydrobenzo[b]pyrrol, 9-(Triethoxysilylmethyl)dibenzopyrrol, 1-(Triethoxysilylmethyl)benzo[d]-1,2-diazol, 1-(Triethoxysilylmethyl)benzo[d]-1,3-diazol und 1-(Triethoxysilylmethyl)benzo[d]-1,2,3-triazol. Weitere Beispiele sind alle oben genannten Verbindungen, bei denen der Triethoxysilylrest durch Trimethoxysilylrest, Diethoxymethylsilylrest oder Dimethoxymethylsilylrest ersetzt ist.

Die erfindungsgemäß eingesetzten heterocyclischen Verbindungen (B) sind handelsübliche Verbindungen bzw. nach in der Chemie gängigen Verfahren herstellbar.

Bei den erfindungsgemäß eingesetzten Organosiliciumverbindungen (A) kann es sich um alle Organosiliciumverbindungen mit mindestens zwei OH-Gruppen handeln, die auch bisher in durch Kondensationsreaktion vernetzbaren Massen eingesetzt worden sind.

Bevorzugt handelt es sich bei den erfindungsgemäß eingesetzten Organosiliciumverbindungen (A) um solche enthaltend Einheiten der Formel

R³_{b}(OH)_{c}SiO_{(4-b-c)/2} (II),

wobei
R³ gleich oder verschieden sein kann und gegebenenfalls substituierte Kohlenwasserstoffreste, die durch Sauerstoffatome unterbrochen sein können, bedeutet,
b 0, 1, 2 oder 3, bevorzugt 2, ist und
c 0, 1, 2 oder 3, bevorzugt 0 oder 1, ist,
mit der Maßgabe, dass die Summe aus b+c≤3 ist und pro Molekül mindestens zwei kondensationsfähige Reste OH anwesend sind.

Bevorzugt handelt es sich bei Rest R³ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Beispiele für Rest R³ sind die für Rest R angegebenen Beispiele.

Besonders bevorzugt handelt es sich bei erfindungsgemäß eingesetzten Organosiliciumverbindungen (A) um im Wesentlichen lineare, OH-terminierte Organopolysiloxane, insbesondere um α,ω-Dihydroxydialkylpolysiloxane.

Beispiele für Organosiliciumverbindungen (A) sind (HO)Me₂SiO[SiMe₂O]₃₀₋₂₀₀₀SiMe₂(OH) mit Me gleich Methylrest.

Die erfindungsgemäß eingesetzten Organosiliciumverbindungen (A) haben eine Viskosität von bevorzugt 10³ bis 10⁶ mPas, besonders bevorzugt von 10⁴ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Die erfindungsgemäßen Massen enthalten Komponente (B) in Mengen von vorzugsweise 0,1 bis 30 Gewichtsteilen, besonders bevorzugt 0,5 bis 20 Gewichtsteilen, insbesondere 1 bis 10 Gewichtsteilen, jeweils bezogen auf 100 Gewichtsteile Komponente (A).

Beispiele für Reste R⁴ und R⁵ sind unabhängig voneinander die für Rest R oben angegebenen Beispiele.

Bevorzugt handelt es sich bei Rest R⁴ um Alkylreste mit 1 bis 4 Kohlenstoffatomen, besonders bevorzugt um den Methyl- oder den Ethylrest.

Bevorzugt handelt es sich bei Rest R⁵ um Kohlenwasserstoffreste mit 1 bis 18 Kohlenstoffatomen, besonders bevorzugt um Alkylreste mit 1 bis 8 Kohlenstoffatomen.

Die erfindungsgemäß eingesetzten Verbindungen (C) enthalten Einheiten der Formeln (III), (IV) und (V) in Mengen von insgesamt bevorzugt mindestens 80 Mol-%, besonders bevorzugt mindestens 95 Mol-%, insbesondere mindestens 98,5 Mol-%.

Die erfindungsgemäß eingesetzten Verbindungen (C) enthalten mindestens 20 Mol-% Einheiten der Formel (V), wobei 20 bis 60 Mol-% bevorzugt und 25 bis 50 Mol-% besonders bevorzugt sind.

Die erfindungsgemäß eingesetzten Verbindungen (C) enthalten bevorzugt 5 bis 30 Mol-% Einheiten der Formel (III).

Die erfindungsgemäß eingesetzten Verbindungen (C) enthalten bevorzugt 20 bis 50 Mol-% Einheiten der Formel (IV).

Die erfindungsgemäß eingesetzten Verbindungen (C) enthalten bevorzugt 20 bis 60 Mol-% Einheiten der Formel (V), 5 bis 30 Mol-% Einheiten der Formel (III) und 20 bis 50 Mol-% Einheiten der Formel (IV).

Die erfindungsgemäß eingesetzten Verbindungen (C) können außer den Einheiten der Formeln (III), (IV) und (V) auch noch weitere Einheiten enthalten, wie z.B. R⁵₂Si(OR⁴)O_{1/2} (VI), R⁵₂SiO_{2/2} (VII) oder SiO_{4/2} (VIII), jeweils mit R⁴ und R⁵ gleich einer der obengenannten Bedeutungen.

Bevorzugt bestehen die erfindungsgemäß eingesetzten Verbindungen (C) aus Einheiten der Formeln (III), (IV) und (V) sowie gegebenenfalls (VI), gegebenenfalls (VII) und gegebenenfalls (VIII).

Die erfindungsgemäß eingesetzten Verbindungen (C) sind bei Raumtemperatur und dem Druck der umgebenden Atmosphäre, also zwischen 900 und 1100 hPa, bevorzugt flüssig.

Die erfindungsgemäß eingesetzten Verbindungen (C) haben eine Viskosität von bevorzugt 1 bis 100 mPa·s, besonders bevorzugt 5 bis 50 mPa·s, insbesondere von 10 bis 40 mPa·s, jeweils bei 25°C und gemessen gemäß DIN 53019.

Die erfindungsgemäß eingesetzten Verbindungen (C) haben eine Dichte von bevorzugt 0,9 bis 1,3 g/cm³, besonders bevorzugt 0,95 bis 1,20 g/cm³, insbesondere von 1,0 bis 1,15 g/cm³, jeweils bei 25°C.

Bevorzugt handelt es sich bei den erfindungsgemäß eingesetzten Verbindungen (C) um harzartige Produkte, besonders bevorzugt um bei Raumtemperatur und einem Druck von 1013 hPa flüssige Siliconharze, womit die technische Einsetzbarkeit wesentlich erleichtert wird.

Bei den Organosiliciumverbindungen (C) handelt es sich um handelsübliche Produkte bzw. können sie nach in der Siliciumchemie gängigen Methoden hergestellt werden. Beispielsweise können die erfindungsgemäß eingesetzten Verbindungen (C) durch Hydrolyse und anschließende Kondensation von Alkyltrialkoxysilanen hergestellt werden. Bevorzugt werden sie aus Methyl-, Ethyl- und Vinyltrialkoxysilanen hergestellt, wobei Methoxy- und Ethoxysilane besonders bevorzugt sind.

Wenngleich durch die Formeln (III) bis (VIII) nicht ausgedrückt, können die erfindungsgemäß eingesetzten Verbindungen (C) herstellungsbedingt bis zu 1 Gew.-% Rest-Si-OH als Verunreinigung enthalten.

Zur Herstellung der erfindungsgemäßen Massen können Verbindungen (C) direkt oder im Gemisch mit niedrigsiedenden organischen Lösungsmitteln, wie Alkoholen oder Toluol, eingesetzt werden. Falls Verbindungen (C) im Gemisch mit organischen Lösungsmitteln eingesetzt werden, was nicht bevorzugt ist, handelt es sich um Mengen von bevorzugt maximal 5 Gew.-%, bezogen auf das Gesamtgewicht des Gemisches.

Die erfindungsgemäßen Massen enthalten Komponente (C) in Mengen von vorzugsweise 0,01 bis 50 Gewichtsteilen, besonders bevorzugt 0,1 bis 20 Gewichtsteilen, insbesondere 1 bis 10 Gewichtsteilen, jeweils bezogen auf 100 Gewichtsteile Komponente (A).

Zusätzlich zu den Komponenten (A), (B) und (C) können die erfindungsgemäßen Massen nun alle Stoffe enthalten, die auch bisher in durch Kondensationsreaktion vernetzbaren Massen eingesetzt worden sind, wie z.B. Katalysatoren (D), basischen Stickstoff aufweisende Verbindung (E), Füllstoffe (F), Haftvermittler (G), Weichmacher (H), weitere Vernetzer (J), Additive (K) und Lösungsmittel (L), wobei Komponenten (J), (E) und (G) verschieden sind zu Komponente (B) und (C) und Komponente (L) verschieden ist zu Weichmacher (H).

Beispiele für Katalysatoren (D) sind die bisher schon bekannten Titanverbindungen, wie Tetraisopropyltitanat, sowie Zirkonium- und Hafniumverbindungen, Zinkverbindungen wie Zink(2-ethylhexoat) und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di-n-octylzinnoxid in Tetraethylsilikat-Hydrolysat, Di-n-octylzinnoxid in einem Gemisch aus 50 Gew.-% Methyltriethoxysilan-Hydrolysat und 50 Gew.-% 3-Aminopropyltriethoxysilan, Di-n-octylzinnoxid in Tetraisopropylsilikat und das Umsetzungsprodukt von Di-n-butylzinndiacetat und Tetraethoxysilan bevorzugt sind.

Falls die erfindungsgemäßen Massen Katalysator (D) enthalten, handelt es sich um Mengen von vorzugsweise 0,0001 bis 2 Gewichtsteilen, bevorzugt 0,001 bis 1 Gewichtsteil, jeweils bezogen auf 100 Gewichtsteile der erfindungsgemäßen Masse. Die erfindungsgemäßen Massen enthalten bevorzugt Katalysator (D).

Bei den erfindungsgemäß gegebenenfalls eingesetzten, basischen Stickstoff aufweisenden Verbindungen (E) handelt es sich vorzugsweise um solche, ausgewählt aus der Gruppe bestehend aus Verbindungen der Formel

NR⁶₃ (IX),

wobei R⁶ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder Polyglykolresten substituiert sind, wobei letztere aus Oxyethylen- und/oder Oxypropyleneinheiten aufgebaut sind, bedeutet, mit der Maßgabe, dass in Formel (IX) höchstens zwei R⁶ die Bedeutung von Wasserstoffatom haben, wobei, falls mehrere R⁶ vorhanden sind, diese auch miteinander zu cyclischen Strukturen verknüpft sein können,
sowie Organosiliciumverbindungen mit mindestens einem basischen Stickstoff aufweisenden organischen Rest, die unterschiedlich sind zu Komponente (B), aus Einheiten der Formel

R⁷ₖYₗSi(OR⁸)ₘO_{(4-k-l-m)/2} (X),

worin
R⁷ gleich oder verschieden sein kann und einen einwertigen, SiC-gebundenen, von basischem Stickstoff freien organischen Rest bedeutet,
R⁸ gleich oder verschieden sein kann und eine für Rest R² angegebene Bedeutung hat,
Y gleich oder verschieden sein kann und einen einwertigen, SiC-gebundenen Rest mit basischem Stickstoff bedeutet,
k 0, 1, 2, oder 3 ist,
l 0, 1, 2, 3 oder 4 ist und
m 0, 1, 2 oder 3 ist,
mit der Maßgabe, dass die Summe aus k+l+m kleiner oder gleich 4 ist und pro Molekül mindestens ein Rest Y anwesend ist.

Beispiele für Rest R⁶ und R⁷ sind jeweils unabhängig voneinander die für R angegebenen Beispiele für gegebenenfalls substituierte Kohlenwasserstoffreste.

Bei den gegebenenfalls substituierten Kohlenwasserstoffresten R⁶ handelt es sich vorzugsweise um solche mit 1 bis 18 Kohlenstoffatomen.

Bei Rest R⁷ handelt es sich vorzugsweise um Kohlenwasserstoffreste mit 1 bis 18 Kohlenstoffatomen, wobei Methyl-, Ethyl- und n-Propylreste besonders bevorzugt sind, insbesondere der Methylrest.

Beispiele für Rest R⁸ sind die für Rest R² angegebenen Beispiele.

Vorzugsweise handelt es sich bei Rest R⁸ um den Methyl- und Ethylrest.

Beispiele für Reste Y sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei Y um H₂N(CH₂)₃-, H₂N(CH₂)₂NH(CH₂)₃-, H₃CNH(CH₂)₃-, C₂H₅NH(CH₂)₃- und cyclo-C₆H₁₁NH(CH₂)₃-Rest, wobei H₂N(CH₂)₂NH(CH₂)₃- und cyclo-C₆H₁₁NH(CH₂)₃-Rest besonders bevorzugt sind.

Handelt es sich bei den Organosiliciumverbindungen aus Einheiten der Formel (X) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (X) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, HN((CH₂)₃-Si(OCH₃)₃)₂ und HN((CH₂)₃-Si(OC₂H₅)₃)₂ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, cyclo-C₆H₁₁NH(CH₂)₃-Si(OC₂H₅)₃, cyclo-C₆H₁₁NH(CH₂)₃-Si(OCH₃)₂CH₃ sowie cyclo-C₆H₁₁NH(CH₂)₃-Si(OC₂H₅)₂CH₃, bevorzugt und H₂N(CH₂)₂NH(CH₂)₃-Si(OC₂H₅)₃, H₂N(CH₂)₂NH(CH₂)₃-Si(OC₂H₅)₂CH₃, cyclo-C₆H₁₁NH(CH₂)₃-Si(OC₂H₅)₃ und cyclo-C₆H₁₁NH(CH₂)₃-Si(OC₂H₅)₂CH₃ sowie jeweils deren Teilhydrolysate besonders bevorzugt sind.

Falls es sich bei der Organosiliciumverbindung aus Einheiten der Formel (X) um Organopolysiloxane handelt, ist der durchschnittliche Wert von k vorzugsweise zwischen 0,5 und 2,5, besonders bevorzugt zwischen 1,4 und 2,0, der durchschnittliche Wert von l vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, l und m kleiner oder gleich 3 ist.

Die erfindungsgemäß einsetzbaren Organopolysiloxane aus Einheiten der Formel (X) haben eine Viskosität bei 25°C von vorzugsweise 5 bis 10⁵ mPas, besonders bevorzugt von 10 bis 10⁴ mPas.

Beispiele für die erfindungsgemäß einsetzbaren Organopolysiloxane aus Einheiten der Formel (X) sind H₂N(CH₂)₃-Si(OCH₃)₂-O-Si(CH₃)(OCH₃)₂, H₂N(CH₂)₃-Si(OC₂H₅)₂-O-Si(CH₃)(OCH₃)₂, H₂N(CH₂)₃-Si(OC₂H₅)₂-O-Si(CH₃)(OC₂H₅)₂, H₂N(CH₂)₃-Si(OCH₃)(CH₃)-O-Si(CH₃)(OCH₃)₂, H₂N(CH₂)₃-Si(OCH₃)(CH₃)-O-Si(OCH₃)₃, H₂N(CH₂)₃-Si(OC₂H₅)(CH₃)-O-Si(OCH₃)₃, H₂N(CH₂)₂NH(CH₂)₃-Si(OCH₃)₂-O-Si(CH₃)(OCH₃)₂, H₂N(CH₂)₂NH(CH₂)₃-Si(OC₂H₅)₂-O-Si(CH₃)(OCH₃)₂, H₂N(CH₂)₂NH(CH₂)₃-Si(OC₂H₅)₂-O-Si(CH₃)(OC₂H₅)₂, H₂N(CH₂)₂NH(CH₂)₃-Si(OCH₃)(CH₃)-O-Si(CH₃)(OCH₃)₂, H₂N(CH₂)₂NH(CH₂)₃-Si(OCH₃)(CH₃)-O-Si(OCH₃)₃, H₂N(CH₂)₂NH(CH₂)₃-Si(OC₂H₅)(CH₃)-O-Si(OCH₃)₃, cyclo-C₆H₁₁NH(CH₂)₃-Si(OCH₃)₂-O-Si(CH₃)(OCH₃)₂, cyclo-C₆H₁₁NH(CH₂)₃-Si(OC₂H₅)₂-O-Si(CH₃)(OCH₃)₂, cyclo-C₆H₁₁NH(CH₂)₃-Si(OC₂H₅)₂-O-Si(CH₃)(OC₂H₅)₂, cyclo-C₆H₁₁NH(CH₂)₃-Si(OCH₃)(CH₃)-O-Si(CH₃)(OCH₃)₂, cyclo-C₆H₁₁NH(CH₂)₃-Si(OCH₃)(CH₃)-O-Si(OCH₃)₃ und cyclo-C₆H₁₁NH(CH₂)₃-Si(OC₂H₅)(CH₃)-O-Si(OCH₃)₃, H₂N(CH₂)₃-Si(OCH₃)₂-(O-Si(CH₃)₂)₁₋₁₀₀-O-Si(OCH₃)₂-(CH₂)₃NH₂, H₂N(CH₂)₂NH(CH₂)₃-Si(OCH₃)₂-(O-Si(CH₃)₂)₁₋₁₀₀-O-Si(OCH₃)₂-(CH₂)₃ NH(CH₂)₂NH₂ und cyclo-C₆H₁₁NH(CH₂)₃-Si(OCH₃)₂-(O-Si(CH₃)₂)₁₋₁₀₀-O-Si(OCH₃)₂-(CH₂)₃NH cyclo-C₆H₁₁ sowie deren Teilhydrolysate, wobei ein Teilhydrolysat aus H₂N(CH₂)₃-Si(OC₂H₅)₂-O-Si(CH₃)(OC₂H₅)₂ besonders bevorzugt ist.

Organosiliciumverbindungen aus Einheiten der Formel (X) sind handelsübliche Produkte bzw. können nach in der Siliciumchemie gängigen Verfahren hergestellt werden.

Beispiele für Amine der Formel (IX) sind Cyclohexylamin, Triethylamin, Trioctylamin, Butylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Falls Komponente (E) eingesetzt wird, handelt es sich bevorzugt um Organosiliciumverbindungen aus Einheiten der Formel (X).

Falls die erfindungsgemäßen Massen Komponente (E) enthalten, handelt es sich um Mengen von vorzugsweise 0,001 bis 10 Gewichtsteilen, bevorzugt 0,01 bis 1 Gewichtsteil, jeweils bezogen auf 100 Gewichtsteile der erfindungsgemäßen Masse. Die erfindungsgemäßen Massen enthalten bevorzugt Komponente (E).

Die erfindungsgemäß gegebenenfalls eingesetzten Organosiliciumverbindungen (E) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (E) als Haftvermittler und/oder als Wasserfänger wirken.

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefälltes Calciumcarbonat, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (F) eingesetzt werden, handelt es sich bevorzugt um hydrophile pyrogene Kieselsäure, gefälltes Calciumcarbonat und Marmormehl.

Falls die erfindungsgemäßen Massen Komponente (F) enthalten, handelt es sich um Mengen von vorzugsweise 1 bis 80 Gewichtsteilen, bevorzugt 5 bis 65 Gewichtsteilen, jeweils bezogen auf 100 Gewichtsteile erfindungsgemäße Masse. Die erfindungsgemäßen Massen enthalten bevorzugt Komponente (F).

Bei dem in den erfindungsgemäßen Massen gegebenenfalls eingesetzten Haftvermittler (G) kann es sich um Silane und Organopolysiloxane mit funktionellen Gruppen, wie beispielsweise solche mit Glycidoxypropyl-, Ureidopropyl- oder Methacryloxypropylresten handeln. Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, Tris-[3-(trimethoxysilyl)propyl]-isocyanurat, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilan, Acryloxymethyl-triethoxysilan und Acryloxymethyl-methyldiethoxysilan sowie deren Teilkondensate.

Falls die erfindungsgemäßen Massen Komponente (G) enthalten, handelt es sich um Mengen von vorzugsweise 0,01 bis 10 Gewichtsteilen, bevorzugt 0,1 bis 2,5 Gewichtsteilen, jeweils bezogen auf 100 Gewichtsteile der erfindungsgemäßen Masse. Die erfindungsgemäßen Massen enthalten außer beim Einsatz von Calciumcarbonaten als Füllstoff bevorzugt keine Komponente (G). Falls die erfindungsgemäßen Massen Calciumcarbonat als Füllstoff (F) enthalten, ist der Einsatz von Komponente (G) bevorzugt.

Beispiele für Weichmacher (H) sind bei Raumtemperatur flüssige, durch Trimethylsiloxygruppen endblockierte Dimethylpolysiloxane, insbesondere mit Viskositäten bei 25°C im Bereich zwischen 5 und 10 000 mPas sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (H) enthalten, handelt es sich um Mengen von vorzugsweise 1 bis 50 Gewichtsteilen, bevorzugt 10 bis 35 Gewichtsteilen, jeweils bezogen auf 100 Gewichtsteile der erfindungsgemäßen Masse. Die erfindungsgemäßen Massen enthalten bevorzugt Komponente (H).

Bei den in den erfindungsgemäßen Massen gegebenenfalls eingesetzten weiteren Vernetzern (J) kann es sich um beliebige, bisher bekannte Vernetzer mit mindestens drei kondensationsfähigen Resten handeln, wie beispielsweise Silane mit mindestens drei Organyloxygruppen, die von Komponente (B) verschieden sind.

Besonders bevorzugt handelt es sich bei den in den erfindungsgemäßen Massen gegebenenfalls eingesetzten weiteren Vernetzern (J) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1,2-Bis(triethoxysilyl)ethan, Methyltriacetoxysilan, Ethyltriacetoxysilan, Methyltris(methylethylketoximo)silan und Vinyltris(methylethylketoximo)silan sowie deren Teilhydrolysate.

Die in den erfindungsgemäßen Massen gegebenenfalls eingesetzten weiteren Vernetzer (J) sind handelsübliche Produkte bzw. können nach in der Siliciumchemie bekannten Verfahren hergestellt werden.

Falls die erfindungsgemäßen Massen weitere Vernetzer (J) enthalten, handelt es sich um Mengen von vorzugsweise 0,1 bis 10 Gewichtsteilen, besonders bevorzugt 0,2 bis 5 Gewichtsteilen, ganz besonders bevorzugt 0,5 bis 3 Gewichtsteilen, jeweils bezogen auf 100 Gewichtsteile der erfindungsgemäßen Masse. Die erfindungsgemäßen Massen enthalten bevorzugt Vernetzer (J).

Beispiele für Additive (K) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether, Biocide wie Fungicide, Bactericide, Acarizide und Mittel zur Regulierung des Moduls wie Polydimethylsiloxane mit nur einer OH-Endgruppe sowie Mittel zur Verbesserung der Lagerstabilität, wie Alkylphosphonsäuren.

Falls die erfindungsgemäßen Massen Komponente (K) enthalten, handelt es sich um Mengen von vorzugsweise 0,0001 bis 10 Gewichtsteilen, bevorzugt 0,001 bis 10 Gewichtsteilen, jeweils bezogen auf 100 Gewichtsteile der erfindungsgemäßen Masse. Die erfindungsgemäßen Massen enthalten bevorzugt Komponente (K).

Beispiele für Lösungsmittel (L) sind Toluol, Xylol, Ethanol und Methanol. Diese können, zum Beispiel herstellungsbedingt, als Verunreinigungen in einem oder mehreren der Bestandteile (A) bis (K) enthalten sein oder gezielt zugegeben werden, wie etwa, wenn Komponente (C) als Lösungsmittelgemisch eingesetzt werden soll.

Falls die erfindungsgemäßen Massen Lösungsmittel (L) enthalten, handelt es sich um Mengen von vorzugsweise 0,01 bis 2 Gewichtsteilen, bevorzugt 0,1 bis 1 Gewichtsteil, jeweils bezogen auf 100 Gewichtsteile der erfindungsgemäßen Masse. Die erfindungsgemäßen Massen enthalten bevorzugt kein Lösungsmittel (L).

Bevorzugt handelt es sich bei den erfindungsgemäßen Massen um solche, herstellbar unter Verwendung von
(A) Organosiliciumverbindungen enthaltend Einheiten der Formel (II),
(B) Verbindungen der Formel (I),
(C) Verbindungen, die Einheiten der Formeln (III), (IV) und (V) in Mengen von insgesamt mindestens 80 Mol-% enthalten, mit der Maßgabe, dass sie mindestens 20 Mol-% Einheiten der Formel (V) aufweisen,
   gegebenenfalls
(D) Katalysatoren,
   gegebenenfalls
(E) basischen Stickstoff aufweisenden Verbindungen, gegebenenfalls
(F) Füllstoffen,
   gegebenenfalls
(G) Haftvermittlern,
   gegebenenfalls
(H) Weichmachern,
   gegebenenfalls
(J) weiteren Vernetzern,
   gegebenenfalls
(K) Additiven und
   gegebenenfalls
(L) Lösungsmitteln.

Des Weiteren bevorzugt handelt es sich bei den erfindungsgemäßen Massen um solche, herstellbar unter Verwendung von
(A) im Wesentliche linearen, OH-terminierten Organopolysiloxanen,
(B) Verbindungen der Formel (I), wobei es sich bei den Heterocyclen, auf welche die Reste A basieren, um Pyrrolidin, Piperidin, Tetrahydro-1,4-oxazin, Tetrahydro-1,4-thiazin, Tetrahydro-1,4-diazin und 1-Methyltetrahydro-1,4-diazin, insbesondere Tetrahydro-1,4-oxazin handelt,
(C) Verbindungen, die Einheiten der Formeln (III), (IV) und (V) in Mengen von insgesamt mindestens 98,5 Mol-% enthalten, mit der Maßgabe, dass sie 25 bis 50 Mol-% Einheiten der Formel (V) aufweisen,
(D) Katalysatoren,
(E) basischen Stickstoff aufweisenden Verbindungen gegebenenfalls
(F) Füllstoffen,
   gegebenenfalls
(G) Haftvermittlern,
   gegebenenfalls
(H) Weichmachern,
   gegebenenfalls
(J) weiteren Vernetzern,
   gegebenenfalls
(K) Additiven und
   gegebenenfalls
(L) Lösungsmitteln.

Besonders bevorzugt werden zur Herstellung der erfindungsgemäßen Massen keine über die Komponenten (A) bis (L) hinausgehende Bestandteile eingesetzt.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, oder unter vermindertem Druck von etwa 20 hPa bis 800 hPa erfolgen. Falls erwünscht, kann dieses Vermischen aber auch bei höheren Temperaturen erfolgen, z.B. bei Temperaturen im Bereich von 35 bis 135°C. Falls gewünscht kann geheizt oder gekühlt werden.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Das erfindungsgemäße Vermischen der einzelnen Komponenten findet bevorzugt unter weitestgehendem Ausschluss von Wasser aus der umgebenden Atmosphäre statt, was z.B. durch Überschleierung mit trockener Luft realisiert werden kann.

Das Einmischen der erfindungsgemäßen Komponente (C) kann zu jedem beliebigen Zeitpunkt erfolgen, so zum Beispiel vor dem Zusatz der Verbindung (B) in Organosiliciumverbindung (A), vor oder nach dem Zusatz der Füllstoffe (F) oder als letzte Komponente, jeweils auch vor oder nach dem Entgasen. Bevorzugt erfolgt der Zusatz vor den Füllstoffen (F).

Es ist unerheblich, in welcher Reihenfolge Polymer, Vernetzer und Weichmacher gemischt werden. Aus Gründen der bequemen Verarbeitung werden bevorzugt Polymer (A) und gegebenenfalls Weichmacher (H) zunächst vorgelegt und danach Komponente (B) und gegebenenfalls Vernetzer (J) zugegeben und bevorzugt daran anschließend Komponente (C) zugegeben.

Falls Füllstoffe (F) zugegeben werden, werden bevorzugt Komponente (A), Komponente (B), Komponente (C), gegebenenfalls Komponente (J) und gegebenenfalls Komponente (E) miteinander innig gemischt, bevor Füllstoff (F), bevorzugt hydrophile Kieselsäure, zugegeben wird.

Bevorzugt wird, falls Komponente (E) eingesetzt wird, das Verhältnis von (E) zu (F) so gewählt, dass pro Quadratmeter BET-Oberfläche des Füllstoffs (F) mindestens 0,2 µmol basischen Stickstoff aufweisende Verbindungen (E) eingesetzt werden.

Falls Füllstoffe (F) und Weichmacher (H) zugesetzt werden, wird bevorzugt das Gemisch Polymer (A), Weichmacher (H), Komponente (C) und Komponente (B) sowie gegebenenfalls Vernetzer (J) durch Rühren innig gemischt.

Falls als Füllstoffe (F) hydrophile pyrogene Kieselsäure zugegeben wird, werden bevorzugt Komponente (A), Weichmacher (H), Komponente (C), Komponente (B) und gegebenenfalls Komponente (J) vor der Zugabe von Füllstoff (F) solange miteinander innig gemischt, bis mindestens 90% der OH-Gruppen der Organosiliciumverbindung (A) mit den Bestandteilen (B) und (J) reagiert haben, wobei vor der Zugabe der pyrogenen Kieselsäure zu beliebiger Zeit Komponente (E) zugegeben wird. Bevorzugt wird das Verhältnis von (E) zu (F) so gewählt, dass pro Quadratmeter BET-Oberfläche des Füllstoffs mindestens 0,2 µmol basischen Stickstoff aufweisende Verbindungen (E) eingesetzt werden.

Des Weiteren ist es in der Regel unerheblich, an welcher Stelle Katalysator (D) zugegeben wird. Sinnvollerweise gibt man den Katalysator jedoch erst zum Schluss zu, da dann die Mischung aktiviert wird. Ein zu langes Mischen bereits sehr reaktiver Dichtmassen wird der Fachmann in der Praxis vermeiden wollen, da ein vollständiger Ausschluss von Feuchtigkeit beim Herstellen der Mischung schwierig oder zumindest unökonomisch ist. Mitunter ist es auch erforderlich, dass der Katalysator nicht mit einer Polymer-Vernetzer-Mischung in Kontakt kommt, die noch größere Mengen an unumgesetzten OH-Gruppen enthält, da dann mitunter eine vorzeitige Vernetzung der Mischung stattfinden kann. Auch aus diesem Grund wird der Fachmann es vermeiden, den Katalysator zu zeitig zuzugeben. Ausnahmsweise wird der Fachmann den Vernetzungskatalysator nur dann am Anfang der Mischungsherstellung mit zusetzen, wenn dieser gleichzeitig Katalysator für die Umsetzung der OH-Polymere mit dem Vernetzer ist.

Das Vermischen der Bestandteile kann an beliebiger Stelle für beliebige Zeit unterbrochen werden. Dabei ist insbesondere eine Unterbrechung von mindestens ca. 1 Minute nach Vermischen der Organosiliciumverbindung (A) mit Verbindung (B) und gegebenenfalls Komponente (E) bzw. gegebenenfalls Vernetzer (J) bevorzugt, wobei bevorzugt Komponente (C) erst nach der Unterbrechung zugegeben wird.

Nach Vermischen aller gewünschten Bestandteile wird die Mischung bevorzugt entgast und in feuchtigkeitsdichte Gebinde gefüllt.

Die erfindungsgemäße Herstellung der erfindungsgemäßen vernetzbaren Massen kann sowohl diskontinuierlich wie auch kontinuierlich durchgeführt werden.

Bei der kontinuierlichen Verfahrensweise wird bevorzugt zunächst Organosiliciumverbindung (A) mit Verbindung (B) sowie gegebenenfalls Weichmacher (H) kontinuierlich, bevorzugt mit einem dynamischen Mischer, vermischt, wobei die Reaktionszeit von Organosiliciumverbindung (A) mit Verbindungen (B) 1 bis 60 Minuten beträgt, bevor gegebenenfalls weitere Mischungsbestandteile eingemischt werden. Beispielsweise können durch gezielte Gestaltung von Leitungslängen und Leitungsquerschnitt in der kontinuierlich arbeitenden Anlage die Reaktionszeiten eingestellt werden. Bevorzugt ist bei dem erfindungsgemäßen kontinuierlichen Verfahren die Reaktionszeit so bemessen, dass mindestens 90 % der OH-Gruppen der Organosiliciumverbindung (A) mit Verbindungen (B) reagiert haben. Anschließend können kontinuierlich, beispielsweise mit einem statischen Mischer, die erfindungsgemäße Organosiliciumverbindung (C) sowie gegebenenfalls Vernetzer (J), basischen Stickstoff aufweisende Verbindung (E), Haftvermittler (G) und Weichmacher (H) eingemischt werden.

Falls erwünscht, erfolgt im Anschluss daran, bevorzugt ohne Zwischenlagerung, das kontinuierliche Einmischen von Füllstoffen (F), wie hochdisperse Kieselsäure, wobei z.B. Mischer mit Rotor/Stator-System verwendet werden können.

Vor der möglichen Zugabe des Katalysators (D) und von Additiven (K) kann die erfindungsgemäße Masse kontinuierlich entgast werden, beispielsweise mit Hilfe eines Zweischneckenextruders.

Bei den erfindungsgemäßen Zusammensetzungen handelt es sich vorzugsweise um unter Ausschluss von Wasser lagerfähige, bei Zutritt von Wasser aushärtende Einkomponentenmassen, die in der Fachwelt in der Regel als RTV-1-Massen bezeichnet werden.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum eine hohe Lagerstabilität aufweisen.

Die erfindungsgemäßen Massen haben den Vorteil, dass keine oder nur geringe Anteile an toxikologisch bedenklichen Spaltprodukten entstehen.

Ferner haben die erfindungsgemäßen Massen den Vorteil, dass eine gleichmäßige Durchhärtung auch in dicker Schicht erreicht werden kann.

Die erfindungsgemäßen Massen haben den Vorteil, dass sich bei der Verwendung von wässrigen Glättmitteln keine gut sichtbaren Flecken auf der Oberfläche der Dichtmasse bilden.

Des Weiteren haben die erfindungsgemäßen Massen den Vorteil, dass sich die Hautbildungszeit in sehr weiten Grenzen einstellen lässt.

Des Weiteren haben die erfindungsgemäßen Massen den Vorteil, dass sie sich vollständig kontinuierlich herstellen lassen.

Die erfindungsgemäßen Massen haben den Vorteil, dass die ausgehärteten Produkte sehr lange ihre mechanische Stabilität in feuchter und warmer Umgebung beibehalten.

Des Weiteren haben die erfindungsgemäßen Massen den Vorteil, dass sie zu klebfreien Materialien auch bei gleichzeitig hoher Luftfeuchtigkeit und erhöhter Tempratur aushärten.

Zusätzlich habe die erfindungsgemäßen Massen den Vorteil, dass durch Variation von Art und Anteil der Verbindung (C) gezielt der Modul der ausgehärteten Massen in einem extrem weiten Rahmen eingestellt werden kann. Dabei bleiben die rheologischen Eigenschaften der nicht ausgehärteten Massen nahezu unverändert, was in der Regel gewünscht wird.

Die Dichten der vorliegenden Erfindung wurden ermittelt nach DIN ISO 2811-1.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Der Modul ist der Spannungswert bei 100 % Dehnung eines Probekörpers nach DIN 53504-85 S2.

Im Folgenden wurden die Viskositäten ermittelt nach DIN 53019.

Im Folgenden steht Me für Methylrest, Et für Ethylrest, Oct für den Octylrest und AMP für den Aminopropylrest.

### Beispiel 1

300 g eines α,ω-Dihydroxypolydimethylsiloxans mit einer Viskosität von 80 000 mPa·s (käuflich erhältlich unter der Bezeichnung "Polymer FD 80" bei der Wacker Chemie AG, D-München), 130 g eines α,ω-Bis(trimethylsiloxy)polydimethylsiloxans mit einer Viskosität von 1000 mPa·s (käuflich erhältlich unter der Bezeichnung "Weichmacher 1000" bei der Wacker Chemie AG, D-München), 9 g 4-(Triethoxysilylmethyl)tetrahydro-1,4-oxazin, 1 g eines Produkts C1, welches aus 16,0 Mol-% Einheiten der Formel MeSi(OEt)₂O_{1/2}, 46,4 Mol-% Einheiten der Formel MeSi(OEt)O_{2/2}, 36,5 Mol-% Einheiten der Formel MeSiO_{3/2}, 0,2 Mol-% Einheiten der Formel Me₂Si(OEt)O_{1/2} und 0,9 Mol-% Einheiten der Formel Me₂SiO_{2/2} bestand, 8 g 3-Aminopropyltriethoxysilan (käuflich erhältlich unter der Bezeichnung GENIOSIL^{®} GF 93 bei der Wacker Chemie AG, D-München), 2 g Vinyltriethoxysilan (käuflich erhältlich unter der Bezeichnung GENIOSIL^{®} GF 56 bei der Wacker Chemie AG, D-München) und 5 g Tetraethylsilikat (käuflich erhältlich unter der Bezeichnung "Silikat TES 28" bei der Wacker Chemie AG, D-München) wurden in einem Planetenmischer vorgelegt und für eine Dauer von 30 Minuten vermischt. Anschließend wurden 45 g einer pyrogenen Kieselsäure mit einer spezifischen Oberfläche nach BET von 150 m²/g (käuflich erhältlich unter der Bezeichnung HDK^{®} V15 bei der Wacker Chemie AG, D-München) eingemischt und bei einem Druck von 50 hPa vollständig homogenisiert. Zuletzt wurden 1 g einer 1:1-Lösung von Octylphosphonsäure in Methyltrimethoxysilan und 2 g eines Reaktionsproduktes aus Dibutylzinndiacetat und Tetraethoxysilan (käuflich erhältlich unter der Bezeichnung "Katalysator 41" bei der Wacker Chemie AG, D-München) zugegeben und nochmals 5 min bei einem Druck von ca. 50 hPa (absolut) homogenisiert.
Die so erhaltene RTV1-Masse wurde in feuchtigkeitsdichte handelsübliche Polyethylen-Kartuschen abgefüllt.

Das Produkt C1 wurde durch Hydrolyse und Kondensation von Methyltriethoxysilan hergestellt. Es wies bei 25°C eine Dichte von 1,09 g/cm³ und eine Viskosität von 28,4 mPa·s auf.

### Beispiel 2

Die in Beispiel 1 beschriebene Arbeitsweise wurde wiederholt mit der Änderung, dass 2 g des Produkts C1 verwendet wurden.

### Beispiel 3

Die in Beispiel 1 beschriebene Arbeitsweise wurde wiederholt mit der Änderung, dass 5 g des Produkts C1 verwendet wurden.

### Beispiel 4

Die in Beispiel 1 beschriebene Arbeitsweise wurde wiederholt mit der Änderung, dass 10 g des Produkts C1 verwendet wurden.

### Beispiel 5

Die in Beispiel 1 beschriebene Arbeitsweise wurde wiederholt mit der Änderung, dass 15 g des Produkts C1 verwendet wurden.

### Beispiel 6

Die in Beispiel 1 beschriebene Arbeitsweise wurde wiederholt mit der Änderung, dass anstelle von 1 g des Produkts C1 5 g eines Produkts C2 verwendet wurden, welches aus 19,8 Mol-% Einheiten der Formel MeSi(OMe)₂O_{1/2}, 47,8 Mol-% Einheiten der Formel MeSi(OMe)O_{2/2}, 31,6 Mol-% Einheiten der Formel MeSiO_{3/2}, 0,2 Mol-% Einheiten der Formel Me₂Si(OMe)O_{1/2} und 0,6 Mol-% Einheiten der Formel Me₂SiO_{2/2} bestand.

Das Produkt C2 wurde durch Hydrolyse und Kondensation von Methyltrimethoxysilan hergestellt. Es wies bei 25°C eine Dichte von 1,14 g/cm³ und eine Viskosität von 31,3 mPa·s auf.

### Beispiel 7

Die in Beispiel 6 beschriebene Arbeitsweise wurde wiederholt mit der Änderung, dass 15 g des Produkts C2 verwendet wurden.

### Beispiel 8

Die in Beispiel 1 beschriebene Arbeitsweise wurde wiederholt mit der Änderung, dass anstelle von 130 g des α,ω-Bis(trimethylsiloxy)polydimethylsiloxans mit einer Viskosität von 1000 mPa·s 100 g α,ω-Bis(trimethylsiloxy)polydimethylsiloxans mit einer Viskosität von 1000 mPa·s und 30 g des Produkts C1 verwendet wurden.

### Beispiel 9

Die in Beispiel 3 beschriebene Arbeitsweise wurde wiederholt mit der Änderung, dass anstelle von 130 g α,ω-Bis(trimethylsiloxy)polydimethylsiloxan mit einer Viskosität von 1000 mPa·s 80 g α,ω-Bis(trimethylsiloxy)polydimethylsiloxan mit einer Viskosität von 1000 mPa·s und 50 g eines Kohlenwasserstoffgemischs verwendet wurden, welches eine kinematische Viskosität von 6,2 mm²/sec bei 40°C, eine Viskositätsdichtekonstante von 0,79 und einen Siedebereich von 300 bis 370°C aufwies.

### Beispiel 10

Die in Beispiel 1 beschriebene Arbeitsweise wurde wiederholt mit der Änderung, dass anstelle von 1 g des Produkts C1 5 g eines Produkts C3 verwendet wurden, welches aus 15,9 Mol-% Einheiten der Formel MeSi(OMe)₂O_{1/2}, 11,4 Mol-% Einheiten der Formel OctSi(OMe)₂O_{1/2}, 44,3 Mol-% Einheiten der Formel MeSi(OMe)O_{2/2} und OctSi(OMe)O_{2/2}, 28,4 Mol-% Einheiten der Formel MeSiO_{3/2} und OctSiO_{3/2}, bestand.

Das Produkt C3 wurde durch Co-Hydrolyse und Co-Kondensation von Methyltrimethoxysilan und i-Octyltrimethoxysilan hergestellt. Es wies bei 25°C eine Dichte von 1,03 g/cm³ und eine Viskosität von 13,3 mPa·s auf.

### Beispiel 11

Die in Beispiel 3 beschriebene Arbeitsweise wurde wiederholt mit der Änderung, dass anstelle von 45 g der pyrogenen Kieselsäure nur 30 g pyrogene Kieselsäure eingesetzt wurden und zusätzlich 400 g eines beschichteten Calciumcarbonates mit einer mittleren Teilchengröße (d50) von 1,7 µm und einem Siebrückstand von weniger als 0,01 % (20 Mikrometer-Sieb, ISO 787/7) (käuflich erhältlich unter dem Namen "Omyabond 520-OM" von Omya International AG, D-Köln) sowie 9 g Tris-[3-(trimethoxysilyl)propyl]-isocyanurat (käuflich erhältlich unter GENIOSIL^{®} GF 69, bei der Wacker Chemie AG, D-München).

### Vergleichsbeispiel A

Die in Beispiel 3 beschriebene Arbeitsweise wurde wiederholt mit der Änderung, dass anstelle von 5 g des Produkts C1 5 g eines Methyltrimethoxysilan-Hydrolysat-Oligomers verwendet wurden, welches aus 37,5 Mol-% Einheiten der Formel MeSi(OMe)₂O_{1/2}, 45,5 Mol-% Einheiten der Formel MeSi(OMe)O_{2/2}, 17,0 Mol-% Einheiten der Formel MeSiO_{3/2} bestand.

### Vergleichsbeispiel B

Die in Beispiel 3 beschriebene Arbeitsweise wurde wiederholt mit der Änderung, dass anstelle von 5 g des Produkts C1 5 g eines Hydrolysats aus Aminopropyltriethoxysilan verwendet wurden, welches aus 38,3 Mol-% Einheiten der Formel AMPSi(OMe)₂O_{1/2}, 45,0 Mol-% Einheiten der Formel AMPSi(OMe)O_{2/2} und nur zu 16,7 Mol-% Einheiten der Formel AMPSiO_{3/2} bestand.

### Vergleichsbeispiel C

Die in Beispiel 3 beschriebene Arbeitsweise wurde wiederholt mit der Änderung, dass anstelle von 5 g des Produkts C1 5 g eines Hydrolysats aus Tetraethoxysilan verwendet wurde, wie es käuflich erhältlich ist unter der Bezeichnung TES 40 bei der Wacker Chemie AG, D-München.

### Beispiel 12

Von den in den Beispielen 1 bis 11 und Vergleichsbeispielen A bis C hergestellten Mischungen wurden jeweils 2 mm dicke Platten auf eine Polyethylenfolie ausgestrichen, die nach einem Tag Aushärtung von der Folie abgelöst und so aufgehängt wurden, dass für weitere 6 Tage von allen Seiten Luft zutreten konnte, so dass die Proben über insgesamt 7 Tage ausgehärtet wurden. Die relative Luftfeuchtigkeit wurde dabei auf 50% eingestellt, wobei die Temperatur auf 23°C geregelt wurde. Von diesen Platten wurden anschließend Prüfkörper der Form S2 gemäß DIN 53504-85 ausgestanzt und der jeweilige Modul ermittelt.

Zur Bestimmung der Härte wurden von den in den Beispielen 1 bis 11 und Vergleichsbeispielen A bis C hergestellten Mischungen 6 mm dicke Probekörper hergestellt, die über 7 Tage bei einer relativen Luftfeuchtigkeit von 50 % und einer Temperatur von 23°C durch Reaktion mit den umgebenden Luftfeuchtigkeit auf PE-Folien ausgehärtet wurden.

Alle Proben härteten zu klebfreien, gummielastischen Materialien aus.

Anschließend wurden die Probekörper zur Bestimmung der Härteänderung für 7 Tage in einen Klimaschrank gehängt, in dem eine Temperatur von 50°C herrschte und eine relative Luftfeuchtigkeit von ca. 95 %. Vor der Bestimmung der Härte wurden die im Klimaschrank gelagerten Prüfkörper nach der Entnahme ca. 30 Minuten bei ca. 23°C und ca. 50 % relativer Luftfeuchtigkeit konditioniert.

Die ermittelten mechanischen Kennwerte werden in Tabelle 1 aufgeführt.

**Tabelle 1:**

| Beispiel | Ausgangshärte (Shore-A) | Härte nach 7 Tagen bei 50°C, 95 % RF (Shore-A) | Modul (MPa) |
|---|---|---|---|
| 1 | 22 | 7 | 0,38 |
| 2 | 23 | 9 | 0,39 |
| 3 | 24 | 13 | 0,41 |
| 4 | 25 | 17 | 0,44 |
| 5 | 26 | 21 | 0,46 |
| 6 | 24 | 10 | n.b |
| 7 | 25 | 16 | n.b. |
| 8 | 33 | 34 | 0,56 |
| 9 | 20 | 14 | n.b. |
| 10 | 23 | 12 | n.b. |
| 11 | 14 | 13 | n.b. |
| A | 18 | 2 | n.b. |
| B | 19 | 3 | n.b. |
| C | 20 | 8 | n.b. |

| | | | |
|---|---|---|---|
| (n.b. = nicht bestimmt) | | | |

Überraschend weisen die erfindungsgemäßen Beispiele 1 bis 11 die gewünschte geringe Reduzierung der Härtewerte auf. Das heißt, die gummielastischen Eigenschaften konnten unter den genannten Lagerbedingungen erhalten werden.

## Patentansprüche

1. Durch Kondensationsreaktion vernetzbare Massen herstellbar unter Verwendung von
(A) Organosiliciumverbindungen mit mindestens zwei OH-Gruppen,
(B) heterocyclischen Verbindungen der Formel
A [CR¹₂SiRₐ(OR²)₃₋ₐ]ₓ (I),
wobei
A einen auf einem Heterocyclus AHₓ basierenden Rest darstellt, enthaltend mindestens ein ringbildendes Element der 3. und/oder 5. Hauptgruppe, bei dem x Wasserstoffatome durch chemische Bindungen zum CR¹₂-Rest ersetzt sind, wobei sich mindestens eine dieser Bindungen an einem ringbildenden Element der 3. oder 5. Hauptgruppe befindet,
R gleiche oder verschiedene, einwertige, gegebenenfalls substituierte Kohlenwasserstoffreste bedeutet,
R¹ gleich oder verschieden sein kann und Wasserstoffatom oder einwertige, gegebenenfalls substituierte Kohlenwasserstoffreste bedeutet,
R² gleich oder verschieden sein kann und einwertige, gegebenenfalls substituierte Kohlenwasserstoffreste bedeutet,
a gleich 0 oder 1, bevorzugt 0, ist und
x gleich 1, 2 oder 3, bevorzugt 1 oder 2, besonders bevorzugt 1, ist,
und/oder deren Teilhydrolysaten
sowie
(C) mindestens einer Verbindung enthaltend Einheiten der Formeln
R⁵Si(OR⁴)₂O_{1/2} (III),
R⁵Si(OR⁴)O_{2/2} (IV)
und
R⁵SiO_{3/2} (V),
wobei
R⁴ gleich oder verschieden sein kann und jeweils unabhängig voneinander einen Alkylrest bedeutet und
R⁵ jeweils unabhängig voneinander ein Kohlenwasserstoffrest ist,
mit der Maßgabe, dass Verbindung (C) mindestens 20 Mol-% Einheiten der Formel (V) enthält.

2. Massen gemäß Anspruch 1, **dadurch gekennzeichnet, dass** es sich bei den Organosiliciumverbindungen (A) um solche enthaltend Einheiten der Formel
R³_{b}(OH)_{c}SiO_{(4-b-c)/2} (II)
handelt, wobei
R³ gleich oder verschieden sein kann und gegebenenfalls substituierte Kohlenwasserstoffreste, die durch Sauerstoffatome unterbrochen sein können, bedeutet,
b 0, 1, 2 oder 3 ist und
c 0, 1, 2 oder 3 ist,
mit der Maßgabe, dass die Summe aus b+c≤3 ist und pro Molekül mindestens zwei kondensationsfähige Reste OH anwesend sind.

3. Massen gemäß Anspruch 1 oder 2, **dadurch gekennzeichnet, dass** Verbindungen (C) Einheiten der Formeln (III), (IV) und (V) in Mengen von insgesamt mindestens 80 Mol-% enthalten.

4. Massen gemäß einem oder mehreren der Ansprüche 1 bis 3, **dadurch gekennzeichnet, dass** Verbindungen (C) 20 bis 60 Mol-% Einheiten der Formel (V), 5 bis 30 Mol-% Einheiten der Formel (III) und 20 bis 50 Mol-% Einheiten der Formel (IV) enthalten.

5. Massen gemäß einem oder mehreren der Ansprüche 1 bis 4, **dadurch gekennzeichnet, dass** Verbindungen (C) eine Dichte von 0,9 bis 1,3 g/cm³ bei 25°C aufweisen.

6. Massen gemäß einem oder mehreren der Ansprüche 1 bis 5, **dadurch gekennzeichnet, dass** sie Komponente (C) in Mengen von 0,01 bis 50 Gewichtsteilen, bezogen auf 100 Gewichtsteile Komponente (A), enthalten.

7. Massen gemäß einem oder mehreren der Ansprüche 1 bis 6, **dadurch gekennzeichnet, dass** es sich um solche handelt, herstellbar unter Verwendung von
(A) Organosiliciumverbindungen enthaltend Einheiten der Formel (II),
(B) Verbindungen der Formel (I),
(C) Verbindungen, die Einheiten der Formeln (III), (IV) und (V) in Mengen von insgesamt mindestens 80 Mol-% enthalten, mit der Maßgabe, dass sie mindestens 20 Mol-% Einheiten der Formel (V) aufweisen,
gegebenenfalls
(D) Katalysatoren,
gegebenenfalls
(E) basischen Stickstoff aufweisenden Verbindungen, gegebenenfalls
(F) Füllstoffen,
gegebenenfalls
(G) Haftvermittlern,
gegebenenfalls
(H) Weichmachern,
gegebenenfalls
(J) weiteren Vernetzern,
gegebenenfalls
(K) Additiven und
gegebenenfalls
(L) Lösungsmitteln.

8. Massen gemäß einem oder mehreren der Ansprüche 1 bis 7, **dadurch gekennzeichnet, dass** es sich um solche handelt, herstellbar unter Verwendung von
(A) im Wesentliche linearen, OH-terminierten Organopolysiloxanen,
(B) Verbindungen der Formel (I), wobei es sich bei den Heterocyclen, auf welche die Reste A basieren, um Pyrrolidin, Piperidin, Tetrahydro-1,4-oxazin, Tetrahydro-1,4-thiazin, Tetrahydro-1,4-diazin und 1-Methyltetrahydro-1,4-diazin, insbesondere Tetrahydro-1,4-oxazin handelt,
(C) Verbindungen, die Einheiten der Formeln (III), (IV) und (V) in Mengen von insgesamt mindestens 98,5 Mol-% enthalten, mit der Maßgabe, dass sie 25 bis 50 Mol-% Einheiten der Formel (V) aufweisen,
(D) Katalysatoren,
(E) basischen Stickstoff aufweisenden Verbindungen gegebenenfalls
(F) Füllstoffen,
gegebenenfalls
(G) Haftvermittlern,
gegebenenfalls
(H) Weichmachern,
gegebenenfalls
(J) weiteren Vernetzern,
gegebenenfalls
(K) Additiven und
gegebenenfalls
(L) Lösungsmitteln.

9. Verfahren zur Herstellung der Zusammensetzung gemäß einem oder mehreren der Ansprüche 1 bis 8 durch Mischen der einzelnen Komponenten in beliebiger Reihenfolge.

10. Formkörper, hergestellt durch Vernetzung der Massen gemäß einem oder mehreren der Ansprüche 1 bis 8 bzw. hergestellt nach dem Verfahren gemäß Anspruch 9.

## Claims

1. Condensation-crosslinkable compositions obtainable by use of
(A) organosilicon compounds having at least two OH groups,
(B) heterocyclic compounds of the formula
A[CR¹₂SiRₐ(OR²)₃₋ₐ]ₓ (I),
where
A represents a radical based on a heterocycle AHₓ, said radical containing one or more ring-forming elements of main groups 3 and/or 5 and having x hydrogen atoms replaced by chemical bonds to the CR¹₂ radical, wherein at least one of these bonds is situated on a ring-forming element of main group 3 or 5,
R represents identical or different, monovalent, optionally substituted hydrocarbyl radicals,
R¹ represents a hydrogen atom or monovalent, optionally substituted hydrocarbyl radicals and may be the same or different at each occurrence,
R² represents monovalent, optionally substituted hydrocarbyl radicals and may be the same or different at each occurrence,
a represents 0 or 1, preferably 0, and
x represents 1, 2 or 3, preferably 1 or 2, more preferably 1,
and/or partial hydrolyzates thereof
and also
(C) at least one compound containing units of the formulae
R⁵Si(OR⁴)₂O_{1/2} (III),
R⁵Si(OR⁴)O_{2/2} (IV)
and
R⁵SiO_{3/2} (V),
where
R⁴ at each occurrence independently represents an alkyl radical and may be the same or different, and
R⁵ at each occurrence independently represents a hydrocarbyl radical
with the proviso that said compound (C) contains at least 20 mol% of units of formula (V).

2. Compositions according to Claim 1, **characterized in that** said organosilicon compounds (A) contain units of the formula
R³_{b}(OH)_{c}SiO_{(4-b-c)/2} (II)
where
R³ at each occurrence may be the same or different and represents optionally substituted hydrocarbyl radicals which may be interrupted by oxygen atoms,
b represents 0, 1, 2 or 3, and
c represents 0, 1, 2 or 3,
with the proviso that the sum of b+c is ≤3 and at least two condensation-capable radicals OH are present per molecule.

3. Compositions according to Claim 1 or 2, **characterized in that** said compounds (C) contain units of formulae (III), (IV) and (V) in amounts of altogether at least 80 mol%.

4. Compositions according to one or more of Claims 1 to 3, **characterized in that** said compounds (C) contain from 20 to 60 mol% of units of formula (V), from 5 to 30 mol% of units of formula (III) and from 20 to 50 mol% of units of formula (IV).

5. Compositions according to one or more of Claims 1 to 4, **characterized in that** said compounds (C) have a density of 0.9 to 1.3 g/cm³ at 25°C.

6. Compositions according to one or more of Claims 1 to 5, **characterized in that** said compositions contain component (C) in amounts of 0.01 to 50 parts by weight, based on 100 parts by weight of component (A).

7. Compositions according to one or more of Claims 1 to 6, **characterized in that** said compositions are obtainable by use of
(A) organosilicon compounds containing units of formula (II),
(B) compounds of formula (I),
(C) compounds containing units of formulae (III), (IV) and (V) in amounts altogether of at least 80 mol%, with the proviso that they include at least 20 mol% of units of formula (V),
optionally
(D) catalysts,
optionally
(E) basic nitrogen compounds,
optionally
(F) fillers,
optionally
(G) adhesion promoters,
optionally
(H) plasticizers,
optionally
(J) further crosslinkers,
optionally
(K) additives, and
optionally
(L) solvents.

8. Compositions according to one or more of Claims 1 to 7, **characterized in that** said compositions are obtainable by use of
(A) essentially linear, OH-terminated organopolysiloxanes,
(B) compounds of formula (I) where the heterocycles on which said radicals A are based comprise pyrrolidine, piperidine, tetrahydro-1,4-oxazine, tetrahydro-1,4-thiazine, tetrahydro-1,4-diazine and 1-methyltetrahydro-1,4-diazine, in particular tetrahydro-1,4-oxazine,
(C) compounds containing units of formulae (III), (IV) and (V) in amounts of altogether at least 98.5 mol%, with the proviso that they include from 25 to 50 mol% of units of formula (V),
(D) catalysts,
(E) basic nitrogen compounds,
optionally
(F) fillers,
optionally
(G) adhesion promoters,
optionally
(H) plasticizers,
optionally
(J) further crosslinkers,
optionally
(K) additives, and
optionally
(L) solvents.

9. Method of producing the composition according to one or more of Claims 1 to 8 by mixing the individual components in any desired order.

10. Shaped article obtained by crosslinking the compositions according to one or more of Claims 1 to 8 and/or obtained by the method according to Claim 9.

## Revendications

1. Masses réticulables par une réaction de condensation, pouvant être préparées par l'utilisation
(A) de composés organosiliciés présentant au moins deux groupes OH,
(B) de composés hétérocycliques de formule
A[CR¹₂SiRₐ(OR²)₃₋ₐ]ₓ (I),
dans laquelle
A r eprésente un radical basé sur un hétérocycle AHₓ, contenant au moins un élément formant un cycle du 3ème et/ou du 5ème groupe principal, dans lequel x atomes d'hydrogène sont remplacés par des liaisons chimiques au radical CR¹₂, au moins une de ces liaisons se trouvant sur un élément formant un cycle du 3ème ou du 5ème groupe principal,
R signifie des radicaux hydrocarbonés identiques ou différents, monovalents, le cas échéant substitués,
R¹ peut être identique ou différent et signifie un atome d'hydrogène ou des radicaux hydrocarbonés monovalents, le cas échéant substitués,
R² peut être identique ou différent et signifie des radicaux hydrocarbonés monovalents, le cas échéant substitués,
a vaut 0 ou 1, de préférence 0, et
x vaut 1, 2 ou 3, de préférence 1 ou 2, de manière particulièrement préférée 1,
et/ou leurs hydrolysats partiels, ainsi que (C) d'au moins un composé contenant des unités des formules
R⁵Si(OR⁴)₂O_{1/2} (III),
R⁵Si(OR⁴)O_{2/2} (IV)
et
R⁵SiO_{3/2} (V),
dans lesquelles
R⁴ peuvent être identiques ou différents et signifient, à chaque fois indépendamment les uns des autres, un radical alkyle et
R⁵ représentent, à chaque fois indépendamment les uns des autres, un radical hydrocarboné,
sous réserve que le composé (C) contienne au moins 20% en mole d'unités de formule (V).

2. Masses selon la revendication 1, **caractérisées en ce qu'**il s'agit, pour les composés organosiliciés (A), de composés contenant des unités de formule
R³_{b}(OH)_{c}SiO_{(4-b-c)/2} (II)
dans laquelle
R³ peut être identique ou différent et signifie des radicaux hydrocarbonés, le cas échéant substitués, qui peuvent être interrompus par des atomes d'oxygène,
b vaut 0, 1, 2 ou 3 et
c vaut 0, 1, 2 ou 3,
sous réserve que la somme de b + c ≤ 3 et qu'il existe au moins deux radicaux OH condensables par molécule.

3. Masses selon la revendication 1 ou 2, **caractérisées en ce que** les composés (C) contiennent des unités des formules (III), (IV) et (V) en des ,quantités, au total, d'au moins 80% en mole.

4. Masses selon l'une ou plusieurs des revendications 1 à 3, **caractérisées en ce que** les composés (C) contiennent 20 à 60% en mole d'unités de formule (V), 5 à 30% en mole d'unités de formule (III) et 20 à 50% en mole d'unités de formule (IV).

5. Masses selon l'une ou plusieurs des revendications 1 à 4, **caractérisées en ce que** les composés (C) présentent une densité de 0,9 à 1,3 g/cm³ à 25°C.

6. Masses selon l'une ou plusieurs des revendications 1 à 5, **caractérisées en ce qu'**elles contiennent le composant (C) en des quantités de 0,01 à 50 parties en poids, par rapport à 100 parties en poids de composant (A).

7. Masses selon l'une ou plusieurs des revendications 1 à 6, **caractérisées en ce qu'**il s'agit de masses pouvant être préparées par l'utilisation
(A) de composés organosiliciés contenant des unités de formule (II),
(B) de composés de formule (I)
(C) de composés qui contiennent des unités des formules (III), (IV) et (V) en des quantités, au total, d'au moins 80% en mole, sous réserve qu'ils présentent au moins 20% en mole d'unités de formule (V), le cas échéant
(D) de catalyseurs, le cas échéant
(E) de composés présentant de l'azote basique, le cas échéant
(F) de charges, le cas échéant
(G) de promoteurs d'adhérence, le cas échéant
(H) de plastifiants, le cas échéant
(J) d'autres réticulants, le cas échéant
(K) d'additifs et le cas échéant
(L) de solvants.

8. Masses selon l'une ou plusieurs des revendications 1 à 7, **caractérisées en ce qu'**il s'agit de masses pouvant être préparées par l'utilisation
(A) d'organopolysiloxanes terminés par OH, essentiellement linéaires,
(B) de composés de formule (I), où il s'agit, pour les hétérocycles, sur lesquels les radicaux A se basent, de pyrrolidine, de pipéridine, de tétrahydro-1,4-oxazine, de tétrahydro-1,4-thiazine, de tétrahydro-1,4-diazine et de 1-méthyltétrahydro-1,4-diazine, en particulier de tétrahydro-1,4-oxazine,
(C) de composés qui contiennent des unités des formules (III), (IV) et (V) en des quantités, au total, d'au moins 98,5% en mole, sous réserve qu'ils présentent au moins 25 à 50% en mole d'unités de formule (V),
(D) de catalyseurs,
(E) de composés présentant de l'azote basique, le cas échéant
(F) de charges, le cas échéant
(G) de promoteurs d'adhérence, le cas échéant
(H) de plastifiants, le cas échéant
(J) d'autres réticulants, le cas échéant
(K) d'additifs et le cas échéant
(L) de solvants.

9. Procédé pour la préparation de la composition selon l'une ou plusieurs des revendications 1 à 8 par mélange des différents composants dans un ordre quelconque.

10. Corps façonnés, préparés par réticulation des masses selon l'une ou plusieurs des revendications 1 à 8 ou préparées selon le procédé selon la revendication 9.
